# EUROPÄISCHE PATENTSCHRIFT

(11) **EP 2 416 138 B1**
(45) Veröffentlichungstag und Bekanntmachung des Hinweises auf die Patenterteilung: **04.01.2017**
(21) Anmeldenummer: 11176491.6
(22) Anmeldetag: 03.08.2011
(51) Int. Cl.: G01K 1/14, G01K 13/02

(54) **Messanordnung und eine Vorrichtung zum Anordnen eines Temperatursensors in einem Messraum**
Measuring apparatus and system for installing a temperature sensor in a measurement space
Dispositif de mesure et système pour installer un capteur de température dans un espace de mesure

(30) Priorität: 04.08.2010 DE 102010033371
(43) Veröffentlichungstag der Anmeldung: 08.02.2012
(73) Patentinhaber: QUNDIS GmbH, 99098 Erfurt (DE)
(72) Erfinder: Hintz, Fred, 78112 St. Georgen (DE); Oesterle, Alexander, 78739 Hardt (DE)
(74) Vertreter: Liedtke, Markus

(56) Entgegenhaltungen:
- US-A1- 2004 101 025

## Beschreibung

Die Erfindung betrifft eine Messanordnung nach den Merkmalen des Oberbegriffs des Anspruchs 1.

Die Temperaturmessung in Heizkreisen erfolgt mit Wärmemengenzählern, deren Platin-Temperatursensoren direkt eintauchend in einem Kugelhahn oder mittels eingeschraubter Tauchhülse in einem T-Stück oder einer Muffe montiert sind.

Aus der DE 39 27 075 A 1 ist eine Messanordnung für die Ermittlung der Temperatur einer eine Rohrleitung durchströmenden Flüssigkeit bekannt. Am offenen Ende eines an der Rohrleitung angeflanschten Rohrstutzens ist ein Kugelhahn-Absperrschieber befestigt, in den bei geöffnetem Kugelhahn ein Temperaturfühler solcher Länge in Durchflussrichtung einsetzbar ist, dass dessen Spitze durch die Messöffnung der Rohrleitung in diese hineinragt. Der Temperaturfühler ist mittels eines Befestigungselementes am offenen Ende des Kugelhahn-Absperrschiebers lösbar befestigt und gegen unbefugtes Entfernen gesichert. Zwischen dem Befestigungselement des Temperaturfühlers und dem Kugelhahn ist eine die Innenwand des Absperrschiebers gegen die Außenwand des Temperaturfühlers abdichtende Ringdichtung angeordnet.

In der DE 100 19 991 A 1 wird eine Vorrichtung zum dichten Ein- und Herausführen eines Messwertgebers in ein bzw. aus einem Fluid in einem Rohr beschrieben. Die Vorrichtung enthält eine Buchse, die einen ersten mit einem Außengewinde versehenen Endabschnitt aufweist, der in eine Gewindebohrung einschraubbar ist. In der Buchse ist eine Hülse über einen begrenzten Verstellweg verschiebbar. Die Buchse hat einen zweiten Endabschnitt mit Außengewinde, das mit einer Mutter zusammenwirkt, die mit einem aus dem zweiten Buchsen-Endabschnitt herausragenden Hülsen-Endabschnitt in Mitnahmeverbindung steht. Ein zweiter Hülsen-Endabschnitt ragt am einen Verstellweg-Ende aus dem ersten Buchsen-Endabschnitt und liegt am anderen Verstellweg-Ende innerhalb der Buchse. Der Hülsen-Endabschnitt hat einen Fluiddurchgang und ist am freien Ende geschlossen. Der zweite Hülsen-Endabschnitt ist am anderen Verstellweg-Ende zwischen dem freien Ende und dem Fluiddurchgang gegen die Buchse abgedichtet. Der Messwertgeber ist in die Hülse bis in eine Endlage einführbar, in der der Messkopf mit dem Fluiddurchgang fluchtet.

Aus der DE 34 28 913 A 1 ist eine Messvorrichtung zum Messen der Temperatur in einer Rohrleitung bekannt. Die Messvorrichtung umfasst zur Messung der Temperatur eines die Rohrleitung durchströmenden Mediums einen quer zur Strömungsrichtung in das Medium ragenden Temperaturfühler. Des Weiteren umfasst die Messvorrichtung ein in die Rohrleitung einsetzbares Drehschieber-Absperrventil, dessen Schieberelement auf einer Seite koaxial zu seiner Drehachse eine Bohrung aufweist, durch die der Temperaturfühler von außen in den Strömungskanal des Schieberelements ragt.

In der US 2004/0101025 A1 wird eine automatische Einführungsvorrichtung beschrieben, welche ein Temperaturerfassungselement umfasst, das derart ausgebildet ist, dass ein direkter Kontakt zwischen dem Fluid in einer Rohrleitung und dem Temperaturerfassungselement ermöglicht ist. Es ist eine Ventilanordnung vorgesehen, um das Innere der Rohrleitung vom Äußerem abzudichten, wenn das Temperaturerfassungselement in einer zurückgezogenen Position ist.

Der Erfindung liegt die Aufgabe zugrunde, eine verbesserte Messanordnung anzugeben.

Die Aufgabe wird erfindungsgemäß gelöst durch eine Messanordnung mit den Merkmalen des Anspruchs 1.

Vorteilhafte Ausgestaltungen der Erfindung sind Gegenstand der Unteransprüche.

Eine Messanordnung umfasst einen Temperatursensor und eine Vorrichtung zum Anordnen des Temperatursensors in einem Messraum, zum Einbringen des Temperatursensors in den Messraum und zum Entfernen des Temperatursensors aus dem Messraum, wobei die Vorrichtung eine Absperreinrichtung zur Abdichtung des Messraums gegenüber einer Außenumgebung zumindest während eines Einbringvorgangs des Temperatursensors in den Messraum und während eines Entfernvorgangs des Temperatursensors aus dem Messraum umfasst und wobei die Absperreinrichtung zum Öffnen und Verschließen einer Sensoröffnung der Vorrichtung ausgebildet ist, durch welche der Temperatursensor in den Messraum einbringbar ist.

Erfindungsgemäß weisen der Temperatursensor und die Vorrichtung jeweils zumindest ein Rastelement auf, welche derart an der Vorrichtung bzw. am Temperatursensor positioniert sind, dass während des Herausziehens des Temperatursensors aus der Vorrichtung ein höherer Widerstand spürbar ist, sobald der Temperatursensor soweit aus der Vorrichtung herausgezogen ist, dass eine Absperrbewegung der Absperreinrichtung freigegeben ist. D. h. die Rastelemente sind korrespondierend zueinander ausgebildet und rasten während des Herausziehens des Temperatursensors ineinander ein und bilden eine Rastverbindung, sobald sie in einer zueinander korrespondierenden Position, d. h. in unmittelbarer Nähe zueinander angeordnet sind.

Die Rastelemente sind dabei vorzugsweise derart ausgebildet, dass die Rastverbindung durch ein weiteres Herausziehen des Temperatursensors aus der Vorrichtung wieder zu lösen ist, und zwar zerstörungsfrei, d. h. ohne eine Zerstörung der Rastelemente, so dass der Temperatursensor ohne einen vorherigen Austausch der Rastelemente wieder in die Vorrichtung einzusetzen ist und die beschriebene Funktion der Rastelemente auch bei einem nachfolgenden Entfernen des Temperatursensors aus der Vorrichtung weiterhin intakt ist. Durch das Lösen der Rastverbindung allein durch das weitere Herausziehen des Temperatursensors sind keine weiteren Elemente zum Lösen der Rastverbindung erforderlich. D. h. das Lösen der Rastverbindung ist mechanisch einfach, kostengünstig und Bauraum sparend realisiert.

Mittels der Vorrichtung ist der Temperatursensor direkt im Messraum, beispielsweise in einem Rohrsystem eines Heizkreislaufs einer Heizungsanlage oder eines Kühlkreislaufs einer Klimaanlage anordbar. Eine Tauchhülse ist nicht erforderlich, so dass eine Direktmessung ermöglicht ist. Auf diese Weise sind von Tauchhülsen verursachte Messfehler vermeidbar und eine zukunftssichere Messeinrichtung beispielsweise zur Wärmemengenerfassung mittels eines Wärmemengenzählers ermöglicht, da Tauchhülsen aufgrund des Messfehlers zukünftig nicht mehr zugelassen sind.

Die Vorrichtung ermöglicht dabei ein Einbringen des Temperatursensors in den Messraum und ein Entfernen des Temperatursensors aus dem Messraum ohne ein Ausströmen eines Mediums aus dem Messraum, da dieser stets gegenüber der Außenumgebung abgedichtet ist. Dadurch ist beispielsweise bei einem Heizkreislauf als ein Heizmedium verwendetes Wasser nicht abzulassen, um den Temperatursensor einzubauen oder auszubauen. Vorteilhafterweise ist der Messraum auch bei ausgebautem, d. h. nicht im Messraum angeordnetem Temperatursensor und/oder auch bei einem im Messraum angeordneten Temperatursensor durch die Absperreinrichtung gegenüber der Außenumgebung abgedichtet.

Mittels der Vorrichtung ist eine Tauchhülsenmessstelle auf kostengünstige und zeitsparende Weise in eine Messstelle für die Direktmessung umrüstbar. Dazu ist lediglich die Tauchhülse zu entfernen und an deren Stelle die Vorrichtung einzusetzen, beispielsweise in ein T-Stück oder eine Muffe des Rohrsystems einzuschrauben. Eine Veränderung des Rohrsystems ist dazu nicht erforderlich. Eine durch das T-Stück oder die Muffe gebildete Wandungsöffnung im Rohrsystem ist danach durch die Vorrichtung wieder abgedichtet und ist auch während des Einsetzens und Entfernens des Temperatursensors sowie zweckmäßigerweise auch bei eingesetztem oder entferntem Temperatursensor durch die Vorrichtung abgedichtet.

Durch die Rastelemente an der Vorrichtung und am Temperatursensor ist ein zu weites Herausziehen des Temperatursensors aus der Vorrichtung aufgrund des deutlich spürbaren höheren Widerstands sicher vermeidbar, da das Herausziehen des Temperatursensors aus der Vorrichtung rechtzeitig zu stoppen ist. Dadurch ist ein Öffnen des Messraums durch das vollständige Entfernen des Temperatursensors aus der Vorrichtung vor dem Verschließen mit der Absperreinrichtung und ein daraus resultierender Austritt des Mediums aus dem Messraum in die Außenumgebung sicher verhindert. Aufgrund der Rastelemente an der Vorrichtung und am Temperatursensor ist der Temperatursensor soweit aus der Vorrichtung herauszuziehen, bis die Absperreinrichtung nicht mehr durch den Temperatursensor blockiert ist, so dass die Absperrbewegung der Absperreinrichtung durchführbar ist, mittels welcher der Messraum durch die Absperreinrichtung gegenüber der Außenumgebung zu verschließen ist.

Aufgrund des deutlich spürbaren höheren Widerstands ist das Herausziehen des Temperatursensors in dieser Position zunächst zu stoppen, so dass der Messraum durch den weiterhin in der Vorrichtung angeordneten Temperatursensor noch sicher und dicht verschlossen ist und das Medium nicht aus dem Messraum in die Außenumgebung austreten kann. Da nun der Temperatursensor die Absperreinrichtung, d. h. deren Absperrbewegung, nicht mehr blockiert, ist die Absperrbewegung der Absperreinrichtung freigegeben, so dass der Messraum durch Bewegen der Absperreinrichtung zu verschließen ist. Danach ist der Temperatursensor auf sichere Weise vollständig aus der Vorrichtung zu entfernen. Da der Messraum durch die Absperreinrichtung verschlossen ist, kann das Medium nicht aus dem Messraum in die Außenumgebung entweichen.

Da die Absperreinrichtung zum Öffnen und Verschließen der Sensoröffnung der Vorrichtung ausgebildet ist, durch welche der Temperatursensor in den Messraum einbringbar ist, ist durch das Öffnen der Sensoröffnung der Temperatursensor einführbar, wobei die Sensoröffnung zweckmäßigerweise durch den eingesetzten Temperatursensor verschlossen ist, so dass der Messraum gegenüber der Außenumgebung abgedichtet ist. Ist der Temperatursensor nicht eingesetzt, so ist die Sensoröffnung durch die Absperreinrichtung verschlossen und dadurch der Messraum gegenüber der Außenumgebung abgedichtet.

Vorzugsweise ist in der Absperreinrichtung eine erste Dichtung angeordnet, mittels welcher der Messraum gegenüber der Außenumgebung abgedichtet ist, wenn der Temperatursensor in der Absperreinrichtung angeordnet ist und die Sensoröffnung durch die Absperreinrichtung geöffnet ist. Dadurch ist der Temperatursensor zunächst in die Absperreinrichtung einsetzbar und danach ist mit der Absperreinrichtung die Sensoröffnung zu öffnen. Da der Messraum durch die Dichtung und den in die Absperreinrichtung eingesetzten Temperatursensor trotzt der geöffneten Sensoröffnung gegenüber der Außenumgebung abgedichtet ist, strömt das Medium nicht aus dem Messraum aus und der Temperatursensor ist durch die Sensoröffnung in den Messraum einführbar.

Bevorzugt weist die Vorrichtung eine zweite Dichtung zwischen dem Messraum und der Absperreinrichtung auf, mittels welcher der Messraum gegenüber der Absperreinrichtung abgedichtet ist, wenn der Temperatursensor im Messraum angeordnet ist. Diese zweite Dichtung ist zweckmäßigerweise im Bereich der Sensoröffnung angeordnet und umschließt den Temperatursensor, wenn dieser durch die Sensoröffnung in den Messraum hindurchgeführt ist und dadurch in der Sensoröffnung und im Messraum angeordnet ist. Die Sensoröffnung ist dann durch den Temperatursensor und die zweite Dichtung verschlossen und abgedichtet.

Dadurch hat das Medium nach dem Einsetzen des Temperatursensors keinen Kontakt zur Absperreinrichtung, so dass eine Verschmutzung, beispielsweise eine Verkalkung und/oder eine Korrosion der Absperreinrichtung verhindert ist. Auf diese Weise ist eine ordnungsgemäße Funktion der Absperreinrichtung über einen sehr langen Einsatzzeitraum sichergestellt. Dies ermöglicht ein problemloses Einsetzen und Entfernen von Temperatursensoren und ein wartungs- oder reparaturbedingter Austausch der Vorrichtung, verbunden mit einem Ausfall der Heizung oder Klimaanlage aufgrund eines Ablassens des Heiz- bzw. Kühlmediums ist vermieden.

In einer bevorzugten Ausführungsform umfasst die Vorrichtung ein Gehäuse, welches in einer Wandungsöffnung einer den Messraum umgebenden Wandung befestigbar ist und welches die Sensoröffnung aufweist, durch die der Temperatursensor in den Messraum einbringbar ist. Das Gehäuse ist beispielsweise in das T-Stück oder die Muffe des Rohrsystems an Stelle der Tauchhülse einschraubbar, wodurch das Rohrsystem wieder verschlossen ist.

Vorteilhafterweise ist das Gehäuse rund ausgebildet und die Sensoröffnung ist außermittig im Gehäuse angeordnet. Dabei ist insbesondere eine Innenform des Gehäuses rund ausgebildet, d. h. ein Innenraum des Gehäuses weist einen runden Querschnitt auf. Eine Außenform des Gehäuses muss hingegen nicht unbedingt rund ausgebildet sein. Die Absperreinrichtung ist zweckmäßigerweise als eine im Gehäuse angeordnete, drehbar gelagerte und vorzugsweise runde Scheibe ausgebildet, welche eine Durchführungsöffnung zur Durchführung des Temperatursensors aufweist, die derart außermittig in der scheibenförmigen Absperreinrichtung angeordnet ist, dass sie durch eine Drehung der Absperreinrichtung auf eine vorgegebene Position über der Sensoröffnung im Gehäuse positionierbar ist.

D. h. die beiden Öffnungen sind in einem gleichen Radius zu einer Drehachse der Absperreinrichtung angeordnet und weisen zweckmäßigerweise einen gleichen Durchmesser auf, welcher mit einem Durchmesser des Temperatursensors korrespondiert. Die Drehachse ist dabei zweckmäßigerweise parallel zu einer Achse der beiden Öffnungen angeordnet.

Durch ein Drehen der Absperreinrichtung derart, dass die beiden Öffnungen übereinander angeordnet sind, ist der Temperatursensor in den Messraum einführbar. Durch ein Verdrehen der Scheibe, so dass die beiden Öffnungen nicht übereinander angeordnet sind und die Sensoröffnung von der Absperreinrichtung vollständig bedeckt ist, ist die Sensoröffnung durch die als Scheibe ausgebildete Absperreinrichtung verschlossen.

Zum Einsetzen des Temperatursensors ist dieser zunächst in die Durchführungsöffnung der scheibenförmigen Absperreinrichtung einzusetzen, wodurch die Durchführungsöffnung verschlossen und durch die erste Dichtung, welche am Temperatursensor anliegt, abgedichtet ist. Danach ist die scheibenartige Absperreinrichtung derart zu verdrehen, dass die beiden Öffnungen übereinander positioniert sind. Dabei strömt kein Medium aus, da die Durchführungsöffnung durch den Temperatursensor verschlossen ist. Sind die beiden Öffnungen übereinander positioniert, ist der Temperatursensor in den Messraum hineinschiebbar.

Zum Entfernen des Temperatursensors ist in umgekehrter Reihenfolge vorzugehen. Der Temperatursensor ist soweit herauszuziehen, bis er nicht mehr in der Sensoröffnung angeordnet ist, aber noch in der Durchführungsöffnung der Absperreinrichtung angeordnet ist, so dass der Messraum weiterhin gegenüber der Außenumgebung abgedichtet ist.

Erfindungsgemäß sind die Rastelemente derart an der Vorrichtung bzw. am Temperatursensor positioniert, dass während des Herausziehens des Temperatursensors aus der Vorrichtung ein höherer Widerstand spürbar ist, sobald der Temperatursensor aus der Sensoröffnung herausgezogen ist. Dadurch ist das unbeabsichtigte zu weite Herausziehen des Temperatursensors aus der Vorrichtung vermieden, da es aufgrund des deutlich spürbaren höheren Widerstandes rechtzeitig zu stoppen ist.

Zweckmäßigerweise ist das am Temperatursensor ausgebildete oder angeordnete Rastelement im Bereich eines unteren Endes, im Bereich eines oberen Endes oder in einem mittleren Bereich des Temperatursensors positioniert. Es sind beispielsweise bereits vorhandene Temperatursensoren in Verbindung mit der Vorrichtung zu nutzen, welche beispielsweise in einem mittleren Bereich und/oder in einem oberen Bereich, d. h. im Bereich eines oberen Endes des Temperatursensors bereits eine oder mehrere Ausformungen aufweisen, welche ein derartiges Rastelement nutzbar sind, zum Beispiel eine so genannte Rollsicke, welche als eine Rastnut nutzbar ist. Dabei ist das zu diesem korrespondierende Rastelement an der Vorrichtung entsprechend zu positionieren, d. h. insbesondere entsprechend hoch zu positionieren, so dass die Rastelemente ineinander einrasten, wenn der Temperatursensor ausreichend weit aus der Vorrichtung herausgezogen ist, um die Absperrbewegung der Absperreinrichtung freizugeben.

In einer vorteilhaften Ausführungsform ist eines der Rastelemente als eine Rastnut ausgebildet und das zu diesem korrespondierende andere Rastelement ist mittels eines Federelementes zumindest dann in Richtung der Rastnut vorgespannt, wenn die Rastelemente in unmittelbarer Nähe zueinander positioniert, aber noch nicht miteinander verrastet sind. D. h. ist das mit dem Federelement vorgespannte Rastelement an der Vorrichtung angeordnet, so ist es mittels des Federelementes in Richtung des Temperatursensors vorgespannt, so dass es in die im Temperatursensor ausgebildete Rastnut einrasten kann, wenn sich die Rastnut während des Herausziehens des Temperatursensors an das mittels des Federelementes vorgespannte Rastelement annähert. Dies gilt analog, wenn das mit dem Federelement vorgespannte Rastelement am Temperatursensor angeordnet und dementsprechend mittels des Federelementes in Richtung der Vorrichtung vorgespannt ist, in welcher dann die Rastnut ausgebildet ist.

Zweckmäßigerweise ist das als Rastnut ausgebildete Rastelement am Temperatursensor ausgebildet und das zu diesem korrespondierende andere Rastelement ist an der Vorrichtung ausgebildet oder angeordnet oder das als Rastnut ausgebildete Rastelement ist an der Vorrichtung ausgebildet und das zu diesem korrespondierende andere Rastelement ist am Temperatursensor ausgebildet oder angeordnet. Bei einer Mehrzahl derartiger zueinander korrespondierender Rastelementpaare können beispielsweise alle Rastnuten an der am Temperatursensor ausgebildet sein und alle zu diesen korrespondierenden Rastelemente sind dann an der Vorrichtung ausgebildet oder es können alle Rastnuten an der Vorrichtung ausgebildet sein und alle zu diesen korrespondierenden Rastelemente sind dann am Temperatursensor ausgebildet. Es kann jedoch auch eine Mischung vorliegen, d. h. einige Rastnuten sind an der Vorrichtung und einige Rastnuten am Temperatursensor ausgebildet und die korrespondierenden Rastelemente dann am jeweils anderen Teil der Messanordnung.

Es können des Weiteren auch lediglich eine Rastnut am Temperatursensor oder an der Vorrichtung ausgebildet sein und eine Mehrzahl korrespondierender Rastelemente am jeweils anderen Teil der Messanordnung oder eine Mehrzahl von Rastnuten am Temperatursensor oder an der Vorrichtung und nur ein zu diesen korrespondierendes Rastelement am jeweils anderen Teil der Messanordnung. Durch diese Möglichkeiten der Ausbildung und Anordnung der Rastelemente sind diese optimal auszubilden und anzuordnen, um dem Herausziehen des Temperatursensors einen sicher spürbaren Widerstand entgegenzusetzen und des Weiteren sowohl die Vorrichtung als auch den Temperatursensor einfach, kostengünstig und Bauraum sparend ausbilden zu können.

Vorzugsweise ist das als Rastnut ausgebildete Rastelement um einen Umfang des Temperatursensors umlaufend ausgebildet oder um einen Innenumfang der Durchführungsöffnung umlaufend ausgebildet. Auf diese Weise ist auch bei einem axialen Verdrehen des Temperatursensors in der Vorrichtung jederzeit sichergestellt, dass die Rastelemente während des Herausziehens des Temperatursensors aus der Vorrichtung sicher ineinander verrasten und dass dies deutlich spürbar ist. Dadurch ist der Temperatursensor in der Vorrichtung axial zu verdrehen, um ihn beispielsweise einfach einzuführen, herauszuziehen oder Bauraum sparend in der Vorrichtung anzuordnen, d. h. beispielsweise derart zu drehen, dass Anschlüsse des Temperatursensors außerhalb der Vorrichtung nicht stören. Dabei ist zum Herausziehen des Temperatursensors aus der Vorrichtung nicht auf dessen Ausrichtung zu achten, da das Verrasten der Rastelemente unabhängig von dessen axialer Verdrehung, d. h. unabhängig von einer Verdrehung des Temperatursensors um dessen Längsachse sichergestellt ist.

Zweckmäßigerweise ist das zum als Rastnut ausgebildeten Rastelement korrespondierende andere Rastelement als eine Kugel, als ein Bolzen, als eine Rastnase oder als ein elastischer Rastring ausgebildet, wobei für den Rastring dessen Elastizität das diesen vorspannende Federelement bildet. D. h. bei Verwendung des Rastrings, welcher beispielsweise als eine Dichtung, d. h. als ein Dichtring ausgebildet ist, der dann gleichzeitig zur Abdichtung dient, ist dieser elastische Rastring gleichzeitig als sein eigenes, diesen vorspannendes Federelement ausgebildet. Insbesondere durch die Kugel, welche eine runde Oberfläche aufweist und sich vorzugsweise drehen kann, ist nach dem Einrasten ein relativ leichtes Ausrasten aus der Rastnut ermöglicht, durch ein weiteres Herausziehen des Temperatursensors aus der Vorrichtung. Ein dafür erforderlicher, am Temperatursensor angreifender Kraftaufwand ist relativ gering, d. h. insbesondere derart gering, dass dieser Kraftaufwand keine Beschädigung des Temperatursensors verursacht. Um dies mit einem Bolzen zu erreichen, sind vorzugsweise Kanten eines in die Rastnut einrastenden Bolzenendes abgerundet und vorzugsweise ist auch die Rastnut abgerundet ausgebildet, d. h. sie weist beispielweise einen halbrunden Querschnitt auf und/oder obere Ränder der Rastnut sind abgerundet. Die abgerundete Rastnut kann für alle korrespondierenden Rastelemente vorteilhaft sein.

Nachdem der Temperatursensor nicht mehr in der Sensoröffnung angeordnet ist, ist die Absperreinrichtung soweit zu verdrehen, bis die Sensoröffnung von der Absperreinrichtung vollständig verdeckt und dadurch verschlossen ist, so dass der Messraum durch die Absperreinrichtung gegenüber der Außenumgebung abgedichtet ist. Danach ist der Temperatursensor aus der Durchführungsöffnung der Absperreinrichtung zu entnehmen.

Die als Scheibe ausgebildete Absperreinrichtung ist zweckmäßigerweise mittels einer Schraube, beispielsweise mittels einer Ringschraube im Gehäuse gehaltert. Dadurch ist ein Herauspressen der Absperreinrichtung aus dem Gehäuse beispielsweise aufgrund eines Mediumdrucks des das Rohrsystem durchströmenden Mediums verhindert.

Um die Absperreinrichtung verdrehen zu können, weist diese zweckmäßigerweise einen seitlich angeordneten Verstellhebel auf. Der Verstellhebel ist vorzugsweise durch eine Seitenöffnung im Gehäuse durchgeführt, welche ein Verschieben des Verstellhebels und dadurch ein Verdrehen der Scheibe ermöglicht. Dabei ist die Seitenöffnung zweckmäßigerweise derart groß ausgerührt, dass die Absperreinrichtung mittels des Verstellhebels in die vorgegebene Position drehbar ist, in welcher die beiden Öffnungen übereinander angeordnet sind, und derart verdrehbar ist, um die Sensoröffnung mittels der Absperreinrichtung vollständig zu bedecken und dadurch zu schließen.

Zweckmäßigerweise weist die Vorrichtung ein Halteelement zur Halterung des Temperatursensors in der Vorrichtung auf. Das Halteelement ist beispielsweise als eine Deckelscheibe mit einer Bohrung ausgebildet, durch welche der Temperatursensor durchführbar ist. Gegen eine Verschiebung des Halteelements am Temperatursensor ist dieses beispielsweise mittels eines Sicherungsstiftes sicherbar, welcher in dem Halteelement angeordnet ist und in eine Rollsicke des Temperatursensors eingreift. Die zu verwendenden Temperatursensoren weisen üblicherweise derartige Rollsicken zur Befestigung einer Dichtung einer Verkabelung und einer Zugentlastung der Verkabelung auf. Die Halterung ist beispielsweise mittels einer Verschraubung am Gehäuse zu befestigen und der Temperatursensor ist im eingebauten Zustand vorzugsweise mittels einer Plombe gegen Manipulationen gesichert.

Ausführungsbeispiele der Erfindung werden im Folgenden anhand von Zeichnungen näher erläutert.

Darin zeigen:
- Figur 1: schematisch eine Schnittdarstellung einer Messanordnung, umfassend einen Temperatursensor und eine Vorrichtung zum Anordnen des Temperatursensors in einem Messraum, zum Einbringen des Temperatursensors in den Messraum und zum Entfernen des Temperatursensors aus dem Messraum,
- Figur 2: schematisch eine Explosionsdarstellung einer Messanordnung, umfassend einen Temperatursensor und eine Vorrichtung zum Anordnen des Temperatursensors in einem Messraum, zum Einbringen des Temperatursensors in den Messraum und zum Entfernen des Temperatursensors aus dem Messraum,
- Figur 3: schematisch eine perspektivische Darstellung einer Vorrichtung zum Anordnen eines Temperatursensors in einem Messraum, zum Einbringen des Temperatursensors in den Messraum und zum Entfernen des Temperatursensors aus dem Messraum mit noch nicht eingesetztem Temperatursensor, und
- Figur 4: schematisch eine perspektivische Darstellung eines Temperatursensors und eines Halteelementes.

Einander entsprechende Teile sind in allen Figuren mit den gleichen Bezugszeichen versehen.

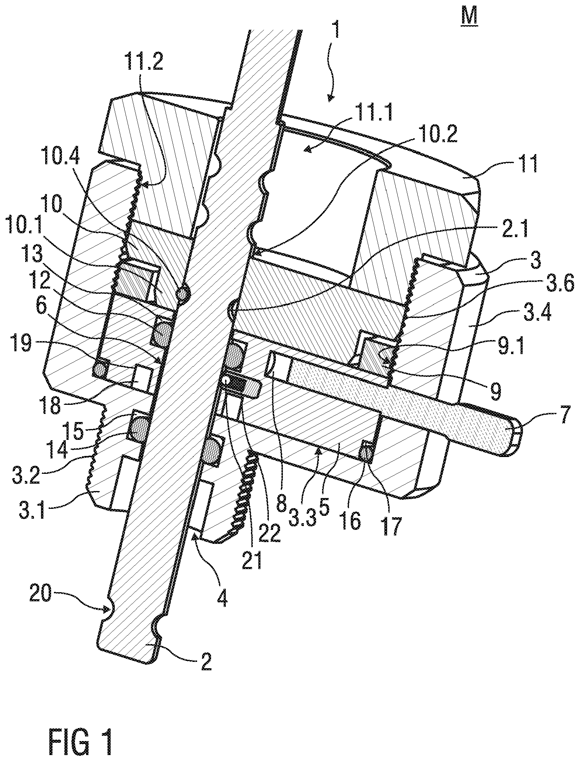

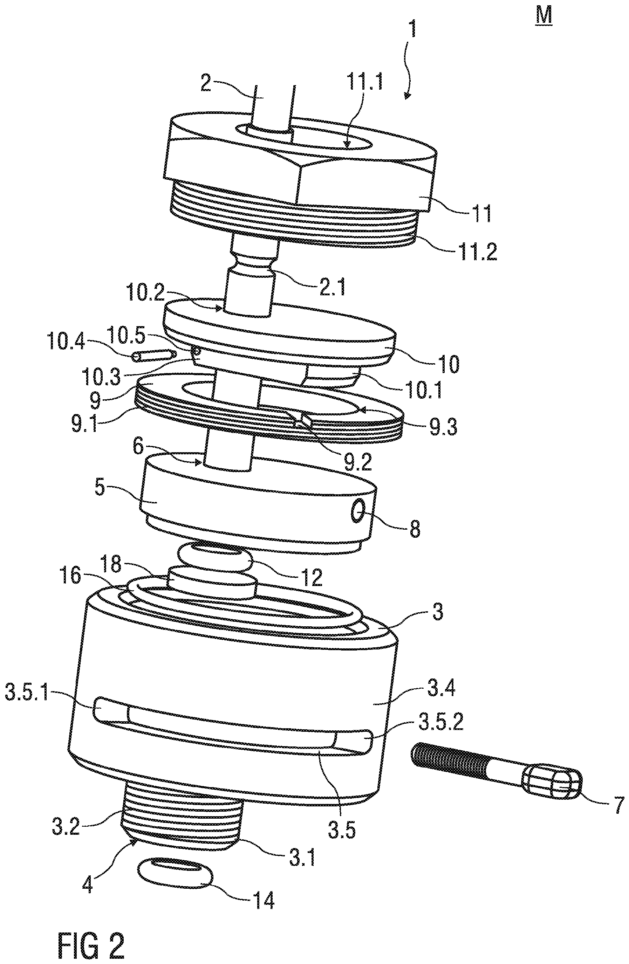

Die Figuren 1 und 2 zeigen schematisch eine Messanordnung M, umfassend einen Temperatursensor 2 und eine Vorrichtung 1 zum Anordnen des Temperatursensors 2 in einem hier nicht dargestellten Messraum, zum Einbringen des Temperatursensors 2 in den Messraum und zum Entfernen des Temperatursensors 2 aus dem Messraum.

Mittels der Vorrichtung 1 ist der Temperatursensor 2 direkt im Messraum anordbar. Der Messraum ist beispielsweise ein Innenbereich in einem Rohrsystem eines Heizkreislaufs einer Heizungsanlage oder eines Kühlkreislaufs einer Klimaanlage oder zum Beispiel ein Innenbereich eines Heizkessels. In dem Messraum befindet sich ein Medium, dessen Temperatur mittels des Temperatursensors 2 zu ermitteln ist. Das Medium, beispielsweise ein Kühlmedium im Kühlkreislauf oder ein Heizmedium, zum Beispiel Wasser im Heizkreislauf, kann dabei den Messraum durchströmen oder in diesem unbeweglich stehen.

Die Vorrichtung 1 ermöglicht dabei ein Einbringen des Temperatursensors 2 in den Messraum und ein Entfernen des Temperatursensors 2 aus dem Messraum ohne ein Ausströmen des Mediums aus dem Messraum, da dieser stets gegenüber der Außenumgebung abgedichtet ist. Dadurch ist beispielsweise bei einem Heizkreislauf als Heizmedium verwendetes Wasser nicht abzulassen, um den Temperatursensor 2 einzubauen oder auszubauen.

Mittels der Vorrichtung 1 ist eine Tauchhülsenmessstelle auf kostengünstige und zeitsparende Weise in eine Messstelle für eine Direktmessung umrüstbar. Dazu ist lediglich die Tauchhülse aus einer Wandungsöffnung einer den Messraum umgebenden Wandung zu entfernen und an deren Stelle die Vorrichtung 1 einzusetzen.

Die Wandungsöffnung ist beispielsweise als ein T-Stück oder eine Muffe im Rohrsystem ausgebildet. Es ist daher lediglich die Tauchhülse aus dem T-Stück oder der Muffe herauszuschrauben und die Vorrichtung 1 hineinzuschrauben. Eine Veränderung des Rohrsystems ist dazu nicht erforderlich.

Zum Austausch der Tauchhülse gegen die Vorrichtung 1 ist möglicherweise das Medium einmalig aus dem entsprechenden Kreislauf abzulassen und dieser nach der Installation der Vorrichtung 1 wieder zu befüllen. Zum Einbringen und Entfernen des Temperatursensors 2 ist das Medium aufgrund der Verwendung der Vorrichtung 1 jedoch nicht mehr abzulassen, so dass der Temperatursensor 2 auf einfache Weise beliebig oft einbringbar und wieder entfernbar ist. Die Wandungsöffnung im Rohrsystem ist durch die Vorrichtung 1 wieder abgedichtet und ist auch während des Einsetzens und Entfernens des Temperatursensors 2 sowie zweckmäßigerweise auch bei eingesetztem oder entferntem Temperatursensor 2 durch die Vorrichtung 1 abgedichtet.

Mittels der Vorrichtung 1 ist eine Direktmessung ohne Verwendung einer Tauchhülse ermöglicht. Auf diese Weise sind von Tauchhülsen verursachte Messfehler vermeidbar und es ist eine zukunftssichere Messeinrichtung beispielsweise zur Wärmemengenerfassung mittels eines Wärmemengenzählers ermöglicht, da Tauchhülsen aufgrund des Messfehlers zukünftig nicht mehr zugelassen sind.

Die Vorrichtung 1 umfasst ein rundes Gehäuse 3, welches in der Wandungsöffnung der den Messraum ungebenden Wandung befestigbar ist. Das Gehäuse 3 ist beispielsweise aus Kunststoff oder aus Metall. Alle übrigen Teile der Vorrichtung 1 können ebenfalls beispielsweise aus Kunststoff oder aus Metall gefertigt sein.

Im hier dargestellten Beispiel weist ein unteres Anschlussstück 3.1 des Gehäuses 3 ein Gehäuseaußengewinde 3.2 auf, so dass es beispielsweise in ein T-Stück oder eine Muffe mit korrespondierendem Innengewinde eines Rohrsystems des Heiz- oder Kühlkreislaufs einschraubbar ist. Für Tauchhülsen ausgelegte Messstellen in derartigen Rohrsystemen weisen auch derartige T-Stücke oder Muffen auf, in welche die Tauchhülsen eingeschraubt sind. Zur Umrüstung der Messstelle ist daher lediglich die Tauchhülse zu entfernen und das Gehäuse 3 einzuschrauben.

Das Gehäuse 3 weist eine Sensoröffnung 4 auf, welche durch das untere Anschlussstück 3.1 hindurchreicht. Durch diese Sensoröffnung 4 ist der Temperatursensor 2 durchführbar und auf diese Weise in den Messraum im Rohrsystem einbringbar und dort anordbar. In dem Messraum ist der Temperatursensor 2 von dem das Rohrsystem durchströmenden Medium direkt umströmbar, so dass Temperaturen des Mediums mittels des Temperatursensors 2 in Direktmessung ermittelbar sind. Die Sensoröffnung 4 ist im Gehäuse 3 außermittig angeordnet. Somit ist auch das Anschlussstück 3.1 am Gehäuse 3 außermittig ausgebildet.

Eine als runde Scheibe ausgebildete Absperreinrichtung 5 ist in einem Innenraum des Gehäuses 3 angeordnet und drehbar gelagert. Die Absperreinrichtung 5 liegt dabei mit einer Unterseite auf einem Gehäuseboden 3.3 auf.

Die Absperreinrichtung 5 ist derart ausgebildet, dass sie um eine Drehachse auf eine vorgegebene Position drehbar ist, in welcher der Temperatursensor 2 durch die Absperreinrichtung 5 hindurch und danach durch die Sensoröffnung 4 im Gehäuse 3 hindurch in den Messraum einführbar ist. Durch ein Verdrehen der Absperreinrichtung 5 in eine andere Position ist die Sensoröffnung 4 im Gehäuse 3 durch die Absperreinrichtung 5 vollständig verschließbar.

Dadurch ist der Messraum gegenüber einer Außenumgebung abgedichtet, wenn kein Temperatursensor 2 im Messraum angeordnet ist. Die Außenumgebung ist dabei eine äußere Umgebung des Messraums, d. h. die äußere Umgebung beispielsweise des Rohrsystems. Mit anderen Worten: Ist der Messraum gegenüber der Außenumgebung abgedichtet, so strömt das Medium nicht aus dem Rohrsystem aus.

Um eine derartige Absperrfunktion und des Weiteren die Durchlassfunktion für den Temperatursensor 2 zu erreichen, weist die Absperreinrichtung 5 eine Durchführungsöffnung 6 zur Durchführung des Temperatursensors 2 von einer Oberseite der Absperreinrichtung 5 zu einer Unterseite der Absperreinrichtung 5 auf. Diese Durchführungsöffnung 6 ist außermittig in der als Scheibe ausgebildeten Absperreinrichtung 5 angeordnet, und zwar derart, dass die Durchführungsöffnung 6 durch eine Drehung der Absperreinrichtung 5 in die vorgegebene Position über der Sensoröffnung 4 im Gehäuse 3 positionierbar ist, so dass die Sensoröffnung 4 im Gehäuse 3 und die Durchführungsöffnung 6 der Absperreinrichtung 5 auf einer gemeinsamen Achse angeordnet sind. Die Achsen der beiden Öffnungen 4, 6 sowie die gemeinsame Achse, wenn die beiden Öffnungen 4, 6 übereinander angeordnet sind, sind zweckmäßigerweise parallel zur Drehachse der Absperreinrichtung 5.

Auf diese Weise ist der Temperatursensor 2 durch beide Öffnungen 4, 6 hindurch in den Messraum einführbar. Durch ein Verdrehen der Absperreinrichtung 5 in eine andere Position ist, wenn der Temperatursensor 2 nicht in der Sensoröffnung 4 im Gehäuse 3 angeordnet ist, die Sensoröffnung 4 mittels der Absperreinrichtung 5 verschließbar, da dann die beiden Öffnungen 4, 6 nicht mehr übereinander angeordnet sind. Dazu ist die Absperreinrichtung 5 soweit zu verdrehen, bis die Sensoröffnung 4 vollständig von der Absperreinrichtung 5 bedeckt und dadurch von dieser verschlossen und abgedichtet ist.

Die beiden Öffnungen 4, 6 weisen zweckmäßigerweise einen gleichen Innendurchmesser auf, welcher mit einem maximalen Außendurchmesser eines durch die beiden Öffnungen 4, 6 hindurchzuführenden Bereiches des Temperatursensors 2 korrespondiert. Dadurch ist der Temperatursensor 2 leicht durch die beiden Öffnungen 4, 6 hindurch führbar und die beiden Öffnungen 4, 6 sind leicht abzudichten, wenn der Temperatursensor 2 in ihnen und im Messraum angeordnet ist.

Um die Absperreinrichtung 5 im Gehäuse 3 von außen entsprechend verdrehen zu können, weist eine Gehäuseseitenwand 3.4 eine langlochförmige Seitenöffnung 3.5 auf. Die Absperreinrichtung 5 weist einen seitlich angeordneten Verstellhebel 7 auf. Dieser ist in die als Scheibe ausgebildete Absperreinrichtung 5 seitlich eingeschraubt. Dazu weist die Absperreinrichtung 5 eine Bohrung 8 mit einem Innengewinde und der Verstellhebel 7 ein korrespondierendes Außengewinde auf.

Der Verstellhebel 7 ragt durch die Seitenöffnung 3.5 aus dem Gehäuse 3 heraus. Die Seitenöffnung 3.5 ist derart lang in der Gehäuseseitenwand 3.4 ausgebildet, dass der Verstellhebel 7, mittels welchem die Absperreinrichtung 5 im Gehäuse 3 verdrehbar ist, derart weit verschiebbar ist, dass die Absperreinrichtung 5 auf die vorgegebene Position drehbar ist, in welcher die beiden Öffnungen 4, 6 übereinander angeordnet sind, und ausreichend weit von dieser Position aus verdrehbar ist, um die Sensoröffnung 4 im Gehäuse 3 mit der Absperreinrichtung 5 zu schließen.

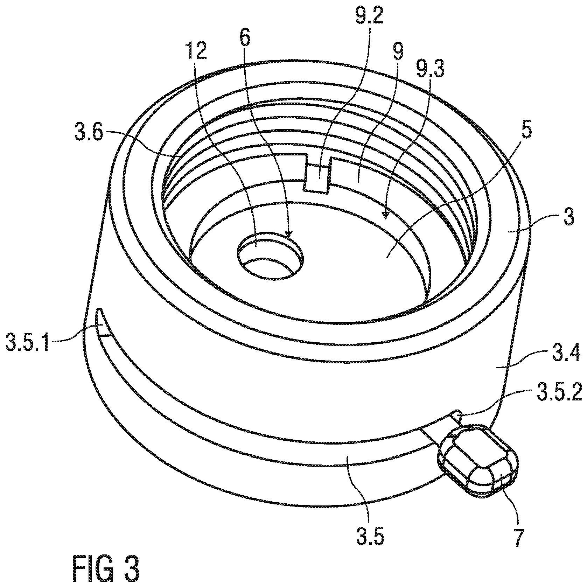

Um dies möglichst einfach, sicher und benutzerfreundlich zu gestalten, ist die Sensoröffnung 4 im Gehäuse 3 zweckmäßigerweise vollständig durch die Absperreinrichtung 5 verschlossen, wenn der Verstellhebel 7 an einem ersten Seitenrand 3.5.1 der Seitenöffnung 3.5 anliegt. Liegt der Verstellhebel 7 an einem zweiten Seitenrand 3.5.2 an, sind die beiden Öffnungen 4, 6 übereinander positioniert. Diese Situation ist in Figur 3 dargestellt. Hier liegt der Verstellhebel 7 am zweiten Seitenrand 3.5.2 der Seitenöffnung 3.5 an und die Absperreinrichtung 5 ist in der vorgegebenen Position, in welcher die beiden Öffnungen 4, 6 übereinander positioniert sind, um den Temperatursensor 2 hindurchzuführen.

Zum Einbringen des Temperatursensors 2 in den Messraum würde die Absperreinrichtung 5 jedoch erst in die in Figur 3 dargestellte Position gedreht, wenn der Temperatursensor 2 bereits in der Durchführungsöffnung 6 der Absperreinrichtung 5 angeordnet ist, um diese zu verschließen und dadurch ein Ausströmen des Mediums aus dem Messraum zu vermeiden, wenn die beiden Öffnungen 4, 6 übereinander positioniert sind. In Figur 3 wurde der Temperatursensor 2 nur aus Gründen der Übersichtlichkeit nicht dargestellt.

Durch ein Verschieben des Verstellhebels 7 bis zum ersten Seitenrand 3.5.1 der Seitenöffnung 3.5 im Gehäuse 3 ist die Absperreinrichtung 5 derart weit im Gehäuse 3 verdrehbar, dass die beiden Öffnungen 4, 6 nicht mehr übereinander positioniert sind und dadurch die Sensoröffnung 4 im Gehäuse 3 durch die Absperreinrichtung 5 vollständig verschlossen ist.

Um die Absperreinrichtung 5 im Gehäuse 3 zu haltern und beispielsweise gegen ein Herausdrücken aus dem Gehäuse 3 aufgrund eines Mediumdrucks im Rohrsystem zu sichern, ist die Absperreinrichtung 5 durch einen Schraubring 9 im Gehäuse 3 gesichert. Im hier dargestellten Beispiel weist das Gehäuse 3 zu diesem Zweck innenseitig an der Gehäuseseitenwand 3.4 ein Gehäuseinnengewinde 3.6 auf.

Der Schraubring 9 ist als ein Ring mit einem seitlichen Ringaußengewinde 9.1 ausgebildet, so dass er in das Gehäuse 3 einschraubbar ist, bis eine Unterseite des Schraubrings 9 auf der Oberseite der Absperreinrichtung 5 aufliegt und die Absperreinrichtung 5 auf diese Weise gegen den Gehäuseboden 3.3 drückt. Um den Schraubring 9 in das Gehäuse 3 einschrauben zu können, weist dieser auf einer Oberseite eine Nut 9.2 auf, in welche ein entsprechendes Werkzeug einsetzbar ist, um den Schraubring 9 zu drehen und dadurch in das Gehäuse 3 einzuschrauben.

Des Weiteren weist die Vorrichtung 1 ein Halteelement 10 für den Temperatursensor 2 auf. Dieses Halteelement 10 ist als eine runde Deckelscheibe ausgeformt, an welcher an einer Unterseite ein Absatz 10.1 ausgebildet ist. Das Halteelement 10 weist eine Haltebohrung 10.2 zur Durchführung des Temperatursensors 2 auf.

Der dargestellte Temperatursensor 2 weist eine Mehrzahl von Rollsicken 2.1 auf. Dies sind nutartige Vertiefungen in einer Seitenwand des Temperatursensors 2. Es sind eine Vielzahl von Temperatursensoren 2 bekannt, welche derartige Rollsicken 2.1 standardmäßig aufweisen. Mittels dieser Rollsicken 2.1 ist beispielsweise eine Abdichtung einer Verkabelung am Temperatursensor 2 zu befestigen und eine Zugentlastung der Verkabelung zu realisieren.

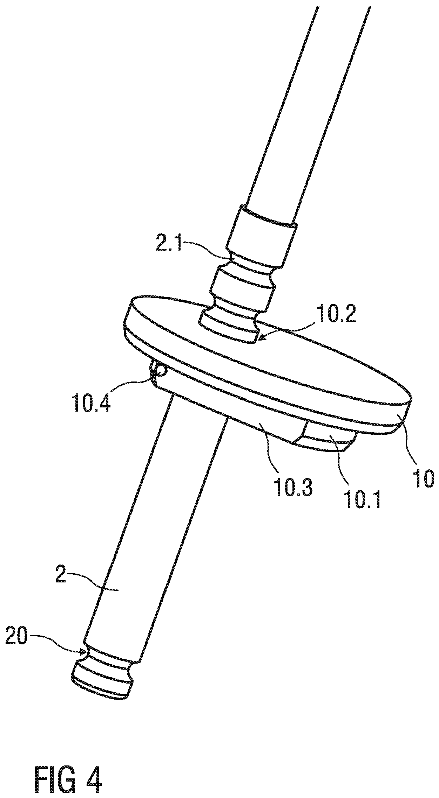

Der Temperatursensor 2 ist, wie in Figur 4 näher dargestellt, so weit durch die Haltebohrung 10.2 hindurchgeführt, bis eine dieser Rollsicken 2.1 in der Haltebohrung 10.2 auf Höhe des Absatzes 10.1 des Halteelementes 10 positioniert ist. Der Absatz 10.1 ist nahezu rund mit einem geringeren Durchmesser als die darüber angeordnete Deckelscheibe des Halteelementes 10, weist jedoch eine seitliche Abflachung 10.3 auf. Auf diese Weise ist ein Abstand von der seitlichen Abflachung 10.3 aus zur Haltebohrung 10.2 relativ gering, so dass ein Sicherungsstift 10.4 in eine Stiftbohrung 10.5 in Richtung der Haltebohrung 10.2 schiebbar ist.

Die Stiftbohrung 10.5 ist dabei derart in den Absatz 10.1 des Halteelementes 10 eingebracht, dass der Sicherungsstift 10.4 im Bereich der Haltebohrung 10.2 in einen Zwischenraum einschiebbar ist, welcher durch die dort positionierte Rollsicke 2.1 des Temperatursensors 2 und eine Seitenwand der Haltebohrung 10.2 gebildet ist. Ist dieser Sicherungsstift 10.4 eingesetzt, so sichert er das Halteelement 10 gegen eine Längsverschiebung am Temperatursensor 2 entlang.

Auf diese Weise sind der Temperatursensor 2 und das Halteelement 10 vormontiert. Der Temperatursensor 2 kann nun noch im Halteelement 10 um eine Längsachse verdrehbar sein, aber er ist nicht mehr gegenüber dem Halteelement 10 verschiebbar.

Das Halteelement 10 hält den eingesetzten Temperatursensor 2 in der Vorrichtung 1 und im Messraum in Position. Zu diesem Zweck ist das Halteelement 10 in der Vorrichtung 1 mittels einer Verschraubung 11, im hier dargestellten Beispiel mittels einer Sechskantschraube gehaltert, welche mit einem entsprechenden für Sechskantschrauben geeigneten Werkzeug in das Gehäuse 3 einschraubbar ist und welche eine Ausnehmung 11.1 zur Durchführung des Temperatursensors 2 aufweist.

Die Verschraubung 11 weist ein zum Gehäuseinnengewinde 3.6 korrespondierendes Verschraubungsaußengewinde 11.2 auf, so dass die Verschraubung 11 in das Gehäuse 3 einschraubbar ist, bis eine Unterseite der Verschraubung 11 eine Oberseite des Halteelementes 10 berührt. Das Halteelement 10 liegt dabei mit einer Unterseite des Absatzes 10.1 auf der Oberseite der Absperreinrichtung 5 und/oder mit einer Unterseite eines Randbereichs der runden Deckelscheibe auf dem Schraubring 9 auf.

Der Schraubring 9 und der Absatz 10.1 des Halteelementes 10 sind hier derart ausgebildet, dass der Absatz 10.1 in eine Innenausnehmung 9.3 des Schraubrings 9 einsetzbar ist. Auf diese Weise ist die Vorrichtung 1 Bauraum sparend ausgebildet.

Um den Temperatursensor 2 in den Messraum einführen zu können, ohne dass das Medium aus dem Messraum in die Außenumgebung ausströmt, weist die Absperreinrichtung 5 eine erste Dichtung 12 auf. Diese ist als ein Dichtungsring ausgebildet, welcher in einer die Durchführungsöffnung 6 umgebenden ersten Dichtungsausformung 13 angeordnet ist und am Temperatursensor 2 anliegt, wenn dieser in die Durchführungsöffnung 6 eingesetzt ist.

Dadurch ist der Temperatursensor 2 in die Durchführungsöffnung 6 der Absperreinrichtung 5 einsetzbar und diese danach in die vorgegebene Position drehbar, in welcher die beiden Öffnungen 4, 6 übereinander positioniert sind. Die Sensoröffnung 4 im Gehäuse 3 ist jetzt zwar durch die Absperreinrichtung 5 geöffnet, aber da die Durchführungsöffnung 6 in der Absperreinrichtung 5 durch den Temperatursensor 2 und die erste Dichtung 12 abgedichtet ist, ist der Messraum weiterhin gegenüber der Außenumgebung abgedichtet, so dass kein Medium aus dem Messraum in die Außenumgebung ausströmt.

Des Weiteren ist eine zweite Dichtung 14 in einer die Sensoröffnung 4 im Gehäuse 3 umgebenden zweiten Dichtungsausformung 15 angeordnet. Diese zweite Dichtung 14 ist ebenfalls als ein Dichtungsring ausgebildet und liegt am Temperatursensor 2 an, wenn dieser durch die Sensoröffnung 4 im Gehäuse 3 hindurch in den Messraum eingeführt ist.

Auf diese Weise ist der Messraum gegenüber der Absperreinrichtung 5 abgedichtet, wenn der Temperatursensor 2 in der Vorrichtung 1 angeordnet und in den Messraum eingeführt ist. Dadurch hat das Medium nach dem Einsetzen des Temperatursensors 2 keinen Kontakt zur Absperreinrichtung 5, so dass eine Verschmutzung, beispielsweise eine Verkalkung und/oder eine Korrosion der Absperreinrichtung 5 verhindert ist.

Dies ermöglicht eine ordnungsgemäße Funktion der Absperreinrichtung 5 über einen sehr langen Einsatzzeitraum, so dass ein problemloses Einsetzen und Entfernen von Temperatursensoren 2 sichergestellt und ein wartungs- oder reparaturbedingter Austausch der Vorrichtung 1, verbunden mit einem Ausfall der Heizung oder Klimaanlage aufgrund eines Ablassens des Heiz- bzw. Kühlmediums vermieden ist.

Die Vorrichtung 1 weist zudem eine dritte Dichtung 16 auf, welche ebenfalls als ein Dichtungsring ausgebildet ist und in einer dritten Dichtungsausformung 17 angeordnet ist. Diese dritte Dichtungsausformung 17 ist an einem unteren Rand der Absperreinrichtung 5 ausgebildet, so dass die dritte Dichtung 16 am Gehäuseboden 3.3, der Innenseite der Gehäuseseitenwand 3.4 und der Absperreinrichtung 5 anliegt. Dadurch ist ein Austritt des Mediums zwischen dem Gehäuse 3 und der Absperreinrichtung 5 hindurch an die Außenumgebung insbesondere bei nicht eingesetztem Temperatursensor 2 und bei durch die Absperreinrichtung 5 verschlossener Sensoröffnung 4 vermieden.

Zudem weist die Vorrichtung 1 noch einen Teflonring 18 auf, um ein leichtes Verdrehen der Absperreinrichtung 5 und eine weitere Abdichtung insbesondere während des Verdrehens der Absperreinrichtung 5 zu ermöglichen. Dieser Teflonring 18 ist in eine Ausformung 19 der Absperreinrichtung 5 eingesetzt, welche die Durchführungsöffnung 6 umgibt, von dieser aber durch einen Materialsteg der Absperreinrichtung 5 getrennt ist und lediglich nach unten in Richtung des Gehäusebodens 3.3 geöffnet ist, so dass der Teflonring 18 auf dem Gehäuseboden 3.3 aufliegt.

Mittels der Vorrichtung 1 ist auf einfache Weise beliebig oft ein Einbringen und Entfernen von Temperatursensoren 2 in den Messraum bzw. aus dem Messraum ermöglicht, ohne dass das Medium aus dem Messraum in die Außenumgebung ausströmt. Zum Einbringen des Temperatursensors 2 in den Messraum ist zunächst, wie bereits beschrieben und in Figur 4 dargestellt, der Temperatursensor 2 durch ein Anbringen des Halteelementes 10 vorzumontieren.

Die Sensoröffnung 4 im Gehäuse 3 ist, da noch kein Temperatursensor 2 im Messraum angeordnet ist, mittels der Absperreinrichtung 5 verschlossen. Der Temperatursensor 2 ist in die Durchführungsöffnung 6 in der Absperreinrichtung 5 einzusetzen und so weit wie möglich einzuführen. Dies ist, da die Durchführungsöffnung 6 noch nicht über der Sensoröffnung 4 im Gehäuse 3 positioniert ist, durch den Gehäuseboden 3.3 begrenzt.

Ist der Temperatursensor 2 in der Durchführungsöffnung 6 angeordnet und bis zum Gehäuseboden 3.3 eingeschoben, ist die Durchführungsöffnung 6 durch den Temperatursensor 2 und durch die an diesem anliegende erste Dichtung 12 abgedichtet, so dass nun die Sensoröffnung 4 im Gehäuse 3 mittels der Absperreinrichtung 5 zu öffnen ist, ohne dass das Medium aus dem Messraum durch die beiden Öffnungen 4, 6 in die Außenumgebung entweicht. Dazu ist die Absperreinrichtung 5 mittels des Verstellhebels 7 soweit zu verdrehen, bis die beiden Öffnungen 4, 6 übereinander positioniert sind.

Nun ist der Temperatursensor 2 durch die Sensoröffnung 4 im Gehäuse 3 in den Messraum einführbar, und zwar soweit, bis das Halteelement 10 im Gehäuse 3 angeordnet ist und auf der Absperreinrichtung 5 und/oder auf dem Schraubring 9 aufliegt. Durch die Verschraubung 11, welche in das Gehäuse 3 einzuschrauben ist, ist das Halteelement 10 sicher im Gehäuse 3 gehaltert.

Da das Halteelement 10 den Temperatursensor 2 in Position hält, ist auch dieser sicher in der Vorrichtung 1 und im Messraum gehaltert. Zweckmäßigerweise ist der Temperatursensor 2 in diesem Endeinbauzustand, in welchem er in der Vorrichtung 1 und im Messraum angeordnet ist, beispielsweise mittels einer Plombierung gegen Manipulationen zu sichern, so dass er nicht oder zumindest nicht unbemerkt durch dazu nicht berechtigte Personen zu entfernen oder auszutauschen ist.

Durch die zweite Dichtung 14, welche im Gehäuse 3 im Bereich der Sensoröffnung 4 angeordnet ist und den eingesetzten Temperatursensor 2 umschließt, ist der Messraum gegenüber der Absperreinrichtung 5 abgedichtet, so dass bei eingesetztem Temperatursensor 2 kein Medium an die Absperreinrichtung 5 gelangen und diese verschmutzen, verkalken und/oder korrodieren kann. Dadurch ist sichergestellt, dass die Absperreinrichtung 5 über einen sehr langen Einsatzzeitraum ordnungsgemäß funktioniert und sich insbesondere stets leicht bewegen lässt. Auf diese Weise ist der Temperatursensor 2 jederzeit in umgekehrter Reihenfolge leicht und problemlos wieder zu entfernen, ohne dass das Medium aus dem Messraum durch die beiden Öffnungen 4, 6 in die Außenumgebung austritt.

Dazu ist lediglich die Verschraubung 11 zu lösen und der Temperatursensor 2 soweit herauszuziehen, bis sich die Absperreinrichtung 5 bewegen lässt, d. h. bis der Temperatursensor 2 zwar noch in der Durchführungsöffnung 6 der Absperreinrichtung 5, aber nicht mehr in der Sensoröffnung 4 im Gehäuse 3 angeordnet ist. Durch den noch in der Durchführungsöffnung 6 angeordneten Temperatursensor 2 und die erste Dichtung 12, welche diesen umschließt, ist der Messraum nach wie vor gegenüber der Außenumgebung abgedichtet, so dass das Medium nicht aus dem Messraum in die Außenumgebung ausströmen kann.

Um ein zu weites Herausziehen des Temperatursensors 2, insbesondere ein vollständiges Herausziehen aus der Vorrichtung 1 und ein daraus resultierendes Ausströmen des Mediums aus dem Messraum zu vermeiden, weisen der Temperatursensor 2 und die Vorrichtung 1 jeweils zumindest ein Rastelement 20, 21 auf, welche derart an der Vorrichtung 1 bzw. am Temperatursensor 2 positioniert sind, das während des Herausziehens des Temperatursensors 2 aus der Vorrichtung 1 ein höherer Widerstand spürbar ist, sobald der Temperatursensor 2 soweit aus der Vorrichtung 1 herausgezogen ist, dass eine Absperrbewegung der Absperreinrichtung 5, d. h. das Verdrehen der als Scheibe ausgebildeten Absperreinrichtung 5, freigegeben ist. Im hier dargestellten Beispiel muss daher dieser höhere Widerstand spürbar sein, sobald der Temperatursensor 2 aus der Sensoröffnung 4 herausgezogen ist, jedoch mit einem unteren Ende noch in der Durchführungsöffnung 6 angeordnet ist, um den Messraum weiterhin gegenüber der Außenumgebung abzudichten. Die Rastelemente 20, 21 sind korrespondierend zueinander ausgebildet und rasten während des Herausziehens des Temperatursensors 2 ineinander ein und bilden eine Rastverbindung, sobald sie in einer zueinander korrespondierenden Position, d. h. in unmittelbarer Nähe zueinander angeordnet sind, wodurch dem weiteren Herausziehen des Temperatursensors 2 aus der Vorrichtung 1 der deutlich spürbare Widerstand entgegen steht.

Die Rastelemente 20, 21 sind dabei vorzugsweise derart ausgebildet, dass die Rastverbindung durch ein weiteres Herausziehen des Temperatursensors 2 aus der Vorrichtung 1 wieder zu lösen ist, und zwar zerstörungsfrei, d. h. ohne eine Zerstörung der Rastelemente 20, 21, so dass der Temperatursensor 2 ohne einen vorherigen Austausch der Rastelemente 20, 21 wieder in die Vorrichtung 1 einzusetzen ist und die beschriebene Funktion der Rastelemente 20, 21 auch bei einem nachfolgenden Entfernen des Temperatursensors 2 aus der Vorrichtung 1 weiterhin intakt ist. Durch das Lösen der Rastverbindung allein durch das weitere Herausziehen des Temperatursensors 2 sind keine weiteren Elemente zum Lösen der Rastverbindung erforderlich. D. h. das Lösen der Rastverbindung ist mechanisch einfach, kostengünstig und Bauraum sparend realisiert.

Durch die Rastelemente 20, 21 an der Vorrichtung 1 und am Temperatursensor 2 ist ein zu weites Herausziehen des Temperatursensors 2 aus der Vorrichtung 1 aufgrund des deutlich spürbaren höheren Widerstands sicher vermeidbar, da das Herausziehen des Temperatursensors 2 aus der Vorrichtung 1 rechtzeitig zu stoppen ist. Dadurch ist ein Öffnen des Messraums durch das vollständige Entfernen des Temperatursensors 2 aus der Vorrichtung 1 vor dem Verschließen mit der Absperreinrichtung 5 und ein daraus resultierender Austritt des Mediums aus dem Messraum in die Außenumgebung sicher verhindert. Aufgrund der Rastelemente 20, 21 an der Vorrichtung 1 und am Temperatursensor 2 ist der Temperatursensor 2 soweit aus der Vorrichtung 1 herauszuziehen, bis die Absperreinrichtung 5 nicht mehr durch den Temperatursensor 2 blockiert ist, so dass die Absperrbewegung der Absperreinrichtung 5, d. h. das Drehen der Absperreinrichtung 5, durchführbar ist, mittels welcher der Messraum durch die Absperreinrichtung 5 gegenüber der Außenumgebung zu verschließen ist.

Aufgrund des deutlich spürbaren höheren Widerstands ist das Herausziehen des Temperatursensors 2 in dieser Position zunächst zu stoppen, so dass der Messraum durch den weiterhin in der Vorrichtung 1 angeordneten Temperatursensor 2 noch sicher und dicht verschlossen ist und das Medium nicht aus dem Messraum in die Außenumgebung austreten kann. Da nun der Temperatursensor 2 die Absperreinrichtung 5, d. h. deren Absperrbewegung, nicht mehr blockiert, ist die Absperrbewegung der Absperreinrichtung 5 freigegeben, so dass der Messraum durch Bewegen der Absperreinrichtung 5, d. h. durch deren Verdrehen, zu verschließen ist. Danach ist der Temperatursensor 2 auf sichere Weise vollständig aus der Vorrichtung 1 zu entfernen. Da der Messraum durch die Absperreinrichtung 5 verschlossen ist, kann das Medium nicht aus dem Messraum in die Außenumgebung entweichen.

Im hier dargestellten Beispiel ist das erste Rastelement 20 als eine Rastnut im Temperatursensor 2 ausgebildet. Als eine derartige Rastnut ist beispielsweise, wie in den Figuren 1 und 4 dargestellt, eine der Rollsicken 2.1 verwendbar oder zu diesem Zweck eine zusätzliche Rollsicke am Temperatursensor 2 auszuformen. Diese zusätzliche Rollsicke, welche die Rastnut bildet, ist im Bereich des unteren Endes des Temperatursensors 2 ausgeformt, und zwar in einer derartigen Höhe, dass bei einem Einrasten des zu dieser korrespondierenden zweiten Rastelementes 21, welches an der Vorrichtung 1 angeordnet ist, der Temperatursensor 2 vollständig aus der Sensoröffnung 4 heraus ist. D. h. ein Abstand des als Rastnut ausgebildeten ersten Rastelementes 20 vom unteren Ende des Temperatursensors 2 ist maximal so groß wie ein Abstand des im hier dargestellten Beispiel an der Absperreinrichtung 5 der Vorrichtung 1 angeordneten ersten Rastelementes 20 von einer Unterkante der Absperreinrichtung 5.

Als zweites Rastelement 21 ist beispielsweise die erste Dichtung 12 verwendbar. Der höhere Widerstand ist dann spürbar, wenn die erste Dichtung 12 in diese zusätzliche Rollsicke , welche das als Rastnut ausgebildete erste Rastelement 20 im Temperatursensor 2 bildet, hineingerutscht ist. Dadurch ist das Herausziehen des Temperatursensors 2 aus der Vorrichtung 1 rechtzeitig zu stoppen. Dabei ist jedoch sicherzustellen, dass die erste Dichtung 12 auch dann noch ausreichend straff am Temperatursensor 2 anliegt, wenn sie in die zusätzliche Rollsicke , welche die Rastnut, d. h. das erste Rastelement 20 bildet, hineingerutscht ist, um eine ausreichende Abdichtung sicherzustellen, so dass kein Medium aus dem Messraum ausströmt.

Im hier dargestellten Beispiel ist jedoch dass an der Vorrichtung 1 angeordnete und zum als Rastnut ausgebildeten ersten Rastelement 20 des Temperatursensors 2 korrespondierende zweite Rastelement 21 nicht die erste Dichtung 12, sondern eine mittels eines Federelementes 22 in Richtung des Temperatursensors 2 vorgespannte Kugel, welche in der Absperreinrichtung 5 im Bereich der Durchführungsöffnung 6 angeordnet ist. Dieses als Kugel ausgebildete zweite Rastelement 21 ist somit mittels des Federelementes 22 in Richtung des als Rastnut im Temperatursensor 2 ausgebildeten ersten Rastelementes 20 vorgespannt, wenn die Rastelemente 20, 21 in unmittelbarer Nähe zueinander positioniert, aber noch nicht miteinander verrastet sind.

Ist der Temperatursensor 2 soweit aus der Sensoröffnung 4 herausgezogen, dass das als Rastnut ausgebildete erste Rastelement 20 auf Höhe des als Kugel ausgebildeten zweiten Rastelementes 21 ist, d. h. vollständig aus der Sensoröffnung 4 herausgezogen, aber noch in der Durchführungsöffnung 6 angeordnet, so erfolgt ein Hineinbewegen des als Kugel ausgebildeten zweiten Rastelementes 21 in das als Rastnut ausgebildete erste Rastelement 20 aufgrund der Vorspannung des Federelementes 22. Ist das zweite Rastelement 21 in das erste Rastelement 20 eingerastet, so ist die Vorspannung durch das Federelement 22 entsprechend reduziert oder ganz aufgehoben. Das Federelement 22 ist in diesem Beispiel als Schraubenfeder ausgebildet. Es kann in weiteren, hier nicht dargestellten Ausführungsbeispielen aber beispielsweise auch als Evolutfeder, Tellerfeder, Ringfeder, als ein hinter dem zweiten Rastelement 21 angeordneter elastischer Werkstoff oder als elastischer Hebelarm ausgebildet sein.

In anderen, hier nicht dargestellten Ausführungsbeispielen kann das zum als Rastnut ausgebildeten ersten Rastelement 20 korrespondierende zweite Rastelement 21 beispielsweise auch als Bolzen oder als Rastnase ausgebildet sein, oder zum Beispiel als elastischer Rastring, beispielsweise in Form der ersten Dichtung 12. Des Weiteren können die Rastelemente 20, 21 beispielsweise auch zu der hier dargestellten Anordnung vertauscht angeordnet sein, d. h. die Rastnut wäre dann an in der Vorrichtung 1, beispielsweise in der Absperreinrichtung 5 ausgebildet. Zudem sind auch eine Mehrzahl derartiger Rastelementpaare 20, 21 möglich, oder nur ein als Rastnut ausgebildetes erstes Rastelement 20 und eine Mehrzahl zu diesem korrespondierender zweiter Rastelemente 21.

Insbesondere durch die Ausbildung des zweiten Rastelementes 21 als Kugel, welche eine runde Oberfläche aufweist und sich vorzugsweise drehen kann, ist nach dem Einrasten ein relativ leichtes Ausrasten aus dem als Rastnut ausgebildeten ersten Rastelement 20 ermöglicht, durch ein weiteres Herausziehen des Temperatursensors 2 aus der Vorrichtung 1. Ein dafür erforderlicher, am Temperatursensor 2 angreifender Kraftaufwand ist relativ gering, d. h. insbesondere derart gering, dass dieser Kraftaufwand keine Beschädigung des Temperatursensors 2 verursacht. Um dies mit einem Bolzen als zweitem Rastelement 21 zu erreichen, sind vorzugsweise Kanten eines in die Rastnut einrastenden Bolzenendes abgerundet und vorzugsweise ist auch das als Rastnut ausgebildete erste Rastelement 20 abgerundet ausgebildet, d. h. die Rastnut weist beispielweise einen halbrunden Querschnitt auf, wie in dem dargestellten Ausführungsbeispiel, und/oder obere Ränder der Rastnut sind abgerundet. Die abgerundete Rastnut kann für alle korrespondierenden zweiten Rastelemente 21 vorteilhaft sein.

Das als Rastnut ausgebildete erste Rastelement 20 ist im hier dargestellten Beispiel um einen Umfang des Temperatursensors 2 umlaufend ausgebildet. Auf diese Weise ist auch bei einem axialen Verdrehen des Temperatursensors 2 in der Vorrichtung 1 jederzeit sichergestellt, dass die Rastelemente 20, 21 während des Herausziehens des Temperatursensors 2 aus der Vorrichtung 1 sicher ineinander verrasten und dass dies deutlich spürbar ist. Dadurch ist der Temperatursensor 2 in der Vorrichtung 1 axial zu verdrehen, um ihn beispielsweise einfach einzuführen, herauszuziehen oder Bauraum sparend in der Vorrichtung 1 anzuordnen, d. h. beispielsweise derart zu drehen, dass Anschlüsse des Temperatursensors 2 außerhalb der Vorrichtung 1 nicht stören. Dabei ist zum Herausziehen des Temperatursensors 2 aus der Vorrichtung 1 nicht auf dessen Ausrichtung zu achten, da das Verrasten der Rastelemente 20, 21 unabhängig von dessen axialer Verdrehung, d. h. unabhängig von einer Verdrehung des Temperatursensors 2 um dessen Längsachse sichergestellt ist. In weiteren, hier nicht dargestellten Ausführungsformen können die Rastelemente 20, 21, beispielsweise das als Rastnut ausgebildete und beispielsweise am Temperatursensor 2 angeordnete erste Rastelement 20 jedoch auch nicht vollständig um den Umfang des Temperatursensors 2 umlaufend ausgebildet sein.

Des Weiteren kann in anderen, hier nicht dargestellten Ausführungsformen das erste Rastelement 20 am Temperatursensor 2 auch in einem mittleren Bereich oder in einem oberen Bereich des Temperatursensors 2, d. h. im Bereich eines oberen Endes des Temperatursensors 2 ausgebildet oder angeordnet sein. Insbesondere bereits aus dem Stand der Technik bekannte Temperatursensoren 2 weisen, wie bereits beschrieben, im oberen und/oder mittleren Bereich derartige Rollsicken auf, welche als erstes Rastelement 20 in Form der Rastnut verwendbar sind. D. h. es sind bereits bekannte Temperatursensoren 2 weiterhin verwendbar, welche des Weiteren auch nicht aufwändig umzubauen und an die Vorrichtung 1 anzupassen sind. Dazu ist lediglich die Vorrichtung 1 entsprechend auszubilden, so dass das zum am Temperatursensor 2 angeordneten oder ausgebildeten ersten Rastelement 20 korrespondierende zweite Rastelement 21 an der Vorrichtung 1 entsprechend positioniert ist, d. h. insbesondere entsprechend hoch positioniert ist, so dass die Rastelemente 20, 21 ineinander einrasten, wenn der Temperatursensor 2 ausreichend weit aus der Vorrichtung (1) herausgezogen ist, um die Absperrbewegung der Absperreinrichtung (5) freizugeben.

Die Sensoröffnung 4 im Gehäuse 3 ist nun, da der Temperatursensor 2 aus der Sensoröffnung 4 herausgezogen ist, wodurch die Absperrbewegung der Absperreinrichtung 5 freigegeben ist, mittels der Absperreinrichtung 5 zu schließen. Dazu ist die Absperreinrichtung 5 soweit zu verdrehen, bis die beiden Öffnungen 4, 6 nicht mehr übereinander positioniert sind und die Sensoröffnung 4 im Gehäuse 3 von der Absperreinrichtung 5 vollständig bedeckt und dadurch geschlossen ist. Nun ist der Temperatursensor 2 aus der Durchführungsöffnung 6 zu entnehmen und von diesem das Halteelement 10 zu entfernen.

Dazu ist lediglich der Sicherungsstift 10.4 aus dem Halteelement 10 zu entfernen, welcher im Halteelement 10 und der Rollsicke 2.1 des Temperatursensors 2 angeordnet ist. Nach Entfernen des Sicherungsstiftes 10.4 ist der Temperatursensor 2 aus dem Halteelement 10 herauszuziehen.

### BEZUGSZEICHENLISTE

- 1: Vorrichtung
- 2: Temperatursensor
- 2.1: Rollsicke
- 3: Gehäuse
- 3.1: Anschlussstück
- 3.2: Gehäuseaußengewinde
- 3.3: Gehäuseboden
- 3.4: Gehäuseseitenwand
- 3.5: Seitenöffnung
- 3.5.1: erster Seitenrand
- 3.5.2: zweiter Seitenrand
- 3.6: Gehäuseinnengewinde
- 4: Sensoröffnung
- 5: Absperreinrichtung
- 6: Durchführungsöffnung
- 7: Verstellhebel
- 8: Bohrung
- 9: Schraubring
- 9.1: Ringaußengewinde
- 9.2: Nut
- 9.3: Innenausnehmung
- 10: Halteelement
- 10.1: Absatz
- 10.2: Haltebohrung
- 10.3: seitliche Abflachung
- 10.4: Sicherungsstift
- 10.5: Stiftbohrung
- 11: Verschraubung
- 11.1: Ausnehmung
- 11.2: Verschraubungsaußengewinde
- 12: erste Dichtung
- 13: erste Dichtungsausformung
- 14: zweite Dichtung
- 15: zweite Dichtungsausformung
- 16: dritte Dichtung
- 17: dritte Dichtungsausformung
- 18: Teflonring
- 19: Ausformung der Absperreinrichtung
- 20: erstes Rastelement
- 21: zweites Rastelement
- 23: Federelement

- M: Messanordnung

## Patentansprüche

1. Messanordnung (M), umfassend einen Temperatursensor (2) und eine Vorrichtung (1) zum Anordnen des Temperatursensors (2) in einem Messraum, zum Einbringen des Temperatursensors (2) in den Messraum und zum Entfernen des Temperatursensors (2) aus dem Messraum,
wobei die Vorrichtung (1) eine Absperreinrichtung (5) zur Abdichtung des Messraums gegenüber einer Außenumgebung zumindest während eines Einbringvorgangs des Temperatursensors (2) in den Messraum und während eines Entfernvorgangs des Temperatursensors (2) aus dem Messraum aufweist, und wobei die Absperreinrichtung (5) zum Öffnen und Verschließen einer Sensoröffnung (4) der Vorrichtung (1) ausgebildet ist, durch welche der Temperatursensor (2) in den Messraum einbringbar ist,
**dadurch gekennzeichnet, dass** der Temperatursensor (2) und die Vorrichtung (1) jeweils zumindest ein Rastelement (20, 21) aufweisen, welche derart an der Vorrichtung (1) bzw. am Temperatursensor (2) positioniert sind, dass während des Herausziehens des Temperatursensors (2) aus der Vorrichtung (1) ein höherer Widerstand spürbar ist, sobald der Temperatursensor (2) soweit aus der Vorrichtung (1) herausgezogen ist, dass eine Absperrbewegung der Absperreinrichtung (5) freigegeben ist, wobei die Rastelemente (20, 21) derart an der Vorrichtung (1) bzw. am Temperatursensor (2) positioniert sind, dass während des Herausziehens des Temperatursensors (2) aus der Vorrichtung (1) ein höherer Widerstand spürbar ist, sobald der Temperatursensor (2) aus der Sensoröffnung (4) herausgezogen ist.

2. Messanordnung (M) nach Anspruch 1,
**dadurch gekennzeichnet, dass** in der Absperreinrichtung (5) eine erste Dichtung (12) angeordnet ist, mittels welcher der Messraum gegenüber der Außenumgebung abgedichtet ist, wenn der Temperatursensor (2) in der Absperreinrichtung (5) angeordnet ist und die Sensoröffnung (4) durch die Absperreinrichtung (5) geöffnet ist.

3. Messanordnung (M) nach Anspruch 1 oder 2,
**dadurch gekennzeichnet, dass** die Vorrichtung (1) eine zweite Dichtung (14) zwischen dem Messraum und der Absperreinrichtung (5) aufweist, mittels welcher der Messraum gegenüber der Absperreinrichtung (5) abgedichtet ist, wenn der Temperatursensor (2) im Messraum angeordnet ist.

4. Messanordnung (M) nach einem der Ansprüche 1 bis 3,
**dadurch gekennzeichnet, dass** die Vorrichtung (1) ein Gehäuse (3) umfasst, welches in einer Wandungsöffnung einer den Messraum umgebenden Wandung befestigbar ist und welches die Sensoröffnung (4) aufweist, durch die der Temperatursensor (2) in den Messraum einbringbar ist.

5. Messanordnung (M) nach Anspruch 4,
**dadurch gekennzeichnet, dass** das Gehäuse (3) rund ausgebildet ist und die Sensoröffnung (4) außermittig im Gehäuse (3) angeordnet ist.

6. Messanordnung (M) nach Anspruch 4 oder 5,
**dadurch gekennzeichnet, dass** die Absperreinrichtung (5) als eine im Gehäuse (3) angeordnete und drehbar gelagerte Scheibe ausgebildet ist, welche eine Durchführungsöffnung (6) zur Durchführung des Temperatursensors (2) aufweist, die derart außermittig in der Absperreinrichtung (5) angeordnet ist, dass sie durch eine Drehung der Absperreinrichtung (5) auf eine vorgegebene Position über der Sensoröffnung (4) im Gehäuse (3) positionierbar ist.

7. Messanordnung (M) nach einem der vorhergehenden Ansprüche,
**dadurch gekennzeichnet, dass** das am Temperatursensor (2) ausgebildete oder angeordnete Rastelement (20, 21) im Bereich eines unteren Endes, im Bereich eines oberen Endes oder in einem mittleren Bereich des Temperatursensors (2) positioniert ist.

8. Messanordnung (M) nach einem der vorhergehenden Ansprüche,
**dadurch gekennzeichnet, dass** eines der Rastelemente (20, 21) als eine Rastnut ausgebildet ist und das zu diesem korrespondierende andere Rastelement (20, 21) mittels eines Federelementes (22) zumindest dann in Richtung der Rastnut vorgespannt ist, wenn die Rastelemente (20, 21) in unmittelbarer Nähe zueinander positioniert, aber noch nicht miteinander verrastet sind, wobei das als Rastnut ausgebildete Rastelement (20) am Temperatursensor (2) ausgebildet ist und das zu diesem korrespondierende andere Rastelement (21) an der Vorrichtung (1) ausgebildet oder angeordnet ist oder wobei das als Rastnut ausgebildete Rastelement (20) an der Vorrichtung (1) ausgebildet ist und das zu diesem korrespondierende andere Rastelement (21) am Temperatursensor (2) ausgebildet oder angeordnet ist.

9. Messanordnung (M) nach Anspruch 8,
**dadurch gekennzeichnet, dass** das als Rastnut ausgebildete Rastelement (20) um einen Umfang des Temperatursensors (2) umlaufend ausgebildet ist oder um einen Innenumfang der Durchführungsöffnung (6) umlaufend ausgebildet ist.

10. Messanordnung (M) nach Anspruch 8 oder 9,
**dadurch gekennzeichnet, dass** das zum als Rastnut ausgebildeten Rastelement (20) korrespondierende andere Rastelement (21) als eine Kugel, als ein Bolzen, als eine Rastnase oder als ein elastischer Rastring ausgebildet ist, wobei für den Rastring dessen Elastizität das diesen vorspannende Federelement (22) bildet.

11. Messanordnung (M) nach einem der Ansprüche 6 bis 10,
**dadurch gekennzeichnet, dass** die Absperreinrichtung (5) einen seitlich angeordneten Verstellhebel (7) aufweist.

12. Messanordnung (M) nach Anspruch 11,
**dadurch gekennzeichnet, dass** der Verstellhebel (7) durch eine Seitenöffnung (3.5) im Gehäuse (3) durchgeführt ist, welche ein Verschieben des Verstellhebels (7) und dadurch ein Verdrehen der Absperreinrichtung (5) ermöglicht.

13. Messanordnung (M) nach einem der vorhergehenden Ansprüche, **gekennzeichnet durch** ein Halteelement (10) zur Halterung des Temperatursensors (2) in der Vorrichtung (1).

## Claims

1. Measuring apparatus (M), comprising a temperature sensor (2) and a system (1) for installing the temperature sensor (2) in a measurement space, for inserting the temperature sensor (2) into the measurement space and for removing the temperature sensor (2) from the measurement space,
wherein the system (1) has a shut-off device (5) for sealing off the measurement space with respect to an outside environment, at least during an operation of inserting the temperature sensor (2) into the measurement space and during an operation of removing the temperature sensor (2) from the measurement space,
and wherein the shut-off device (5) is designed for opening and closing a sensor opening (4) of the system (1), through which the temperature sensor (2) is insertable into the measurement space, **characterized in that** the temperature sensor (2) and the system (1) respectively have at least one latching element (20, 21) each, which are positioned on the system (1) and on the temperature sensor (2), respectively, in such a way that, while the temperature sensor (2) is being withdrawn from the system (1), a greater resistance is noticeable as soon as the temperature sensor (2) has been withdrawn from the system (1) to such an extent that a shut-off movement of the shut-off device (5) is enabled, wherein the latching elements (20, 21) are positioned on the system (1) and on the temperature sensor (2), respectively, in such a way that, while the temperature sensor (2) is being withdrawn from the system (1), a greater resistance is noticeable as soon as the temperature sensor (2) has been withdrawn from the sensor opening (4).

2. Measuring apparatus (M) according to Claim 1, **characterized in that** in the shut-off device (5) there is arranged a first seal (12), by means of which the measurement space is sealed off with respect to the outside environment when the temperature sensor (2) has been arranged in the shut-off device (5) and the sensor opening (4) has been opened by the shut-off device (5).

3. Measuring apparatus (M) according to Claim 1 or 2, **characterized in that** the system (1) has between the measurement space and the shut-off device (5) a second seal (14), by means of which the measurement space is sealed off with respect to the shut-off device (5) when the temperature sensor (2) has been installed in the measurement space.

4. Measuring apparatus (M) according to one of Claims 1 to 3,
**characterized in that** the system (1) comprises a housing (3), which is fixable in a wall opening of a wall surrounding the measurement space and which has the sensor opening (4), through which the temperature sensor (2) is insertable into the measurement space.

5. Measuring apparatus (M) according to Claim 4, **characterized in that** the housing (3) is of a round form and the sensor opening (4) is arranged off-centre in the housing (3).

6. Measuring apparatus (M) according to Claim 4 or 5, **characterized in that** the shut-off device (5) is formed as a disc which is arranged and rotatably mounted in the housing (3) and has a lead-through opening (6), which is intended for leading through the temperature sensor (2), and is arranged off-centre in the shut-off device (5) in such a way that, by a turning of the shut-off device (5), it is positionable to a predetermined position over the sensor opening (4) in the housing (3).

7. Measuring apparatus (M) according to one of the preceding claims,
**characterized in that** the latching element (20, 21) formed or arranged on the temperature sensor (2) is positioned in the region of a lower end, in the region of an upper end or in a middle region of the temperature sensor (2).

8. Measuring apparatus (M) according to one of the preceding claims,
**characterized in that** one of the latching elements (20, 21) is formed as a latching groove and the other latching element (20, 21), corresponding thereto, is prestressed in the direction of the latching groove by means of a spring element (22) at least whenever the latching elements (20, 21) are positioned in direct proximity to one another but are still not in latching engagement with one another, wherein the latching element (20) formed as a latching groove is formed on the temperature sensor (2) and the other latching element (21), corresponding thereto, is formed or arranged on the system (1) or wherein the latching element (20) formed as a latching groove is formed on the system (1) and the other latching element (21), corresponding thereto, is formed or arranged on the temperature sensor (2).

9. Measuring apparatus (M) according to Claim 8,
**characterized in that** the latching element (20) formed as a latching groove is formed so as to run around a circumference of the temperature sensor (2) or is formed so as to run around an inner circumference of the lead-through opening (6).

10. Measuring apparatus (M) according to Claim 8 or 9, **characterized in that** the other latching element (21), corresponding to the latching element (20) formed as a latching groove, is formed as a ball, as a pin, as a latching lug or as an elastic latching ring, wherein, for the latching ring, the elasticity of said latching ring forms the spring element (22) prestressing the latching ring.

11. Measuring apparatus (M) according to one of Claims 6 to 10,
**characterized in that** the shut-off device (5) has a laterally arranged adjusting lever (7).

12. Measuring apparatus (M) according to Claim 11,
**characterized in that** the adjusting lever (7) is led through a side opening (3.5) in the housing (3), which makes possible a shifting of the adjusting lever (7) and thereby a turning of the shut-off device (5).

13. Measuring apparatus (M) according to one of the preceding claims,
**characterized by** a holding element (10) for securing the temperature sensor (2) in the system (1).

## Revendications

1. Dispositif de mesure (M) comprenant un capteur de température (2) et un moyen (1) destiné à disposer le capteur de température (2) dans un espace de mesure afin d'introduire le capteur de température (2) dans l'espace de mesure et de retirer le capteur de température (2) hors de l'espace de mesure,
dans lequel le moyen (1) comporte un dispositif d'obturation (5) destiné à étanchéifier l'espace de mesure par rapport à un environnement externe au moins pendant un processus d'introduction du capteur de température (2) dans l'espace de mesure et pendant un processus d'extraction du capteur de température (2) hors de l'espace de mesure,
et dans lequel le dispositif d'obturation (5) est conçu pour ouvrir et fermer une ouverture de capteur (4) du moyen (1), à travers laquelle le capteur de température (2) peut être introduit dans l'espace de mesure,
**caractérisé en ce que** le capteur de température (2) et le dispositif (1) comportent respectivement au moins un élément d'encliquetage (20, 21) qui sont positionnés sur le dispositif (1) et sur le capteur de température (2) respectivement de manière à ce que, pendant l'extraction du capteur de température (2) hors du moyen (1), une résistance plus élevée soit ressentie dès que le capteur de température (2) est extrait hors du moyen (1) à une distance telle qu'un mouvement d'obturation du dispositif d'obturation (5) soit déclenché, dans lequel les éléments d'encliquetage (20, 21) sont positionnés sur le moyen (1) et sur le capteur de température (2) respectivement de manière à ce que, pendant l'extraction du capteur de température (2) hors du moyen (1), une résistance plus élevée puisse être ressentie dès que le capteur de température (2) est extrait de l'ouverture de capteur (4).

2. Dispositif de mesure (M) selon la revendication 1, **caractérisé en ce qu'**il est prévu dans le dispositif d'obturation (5) un premier dispositif d'étanchéité (12) au moyen duquel l'espace de mesure est rendu étanche par rapport à l'environnement externe lorsque le capteur de température (2) est disposé dans le dispositif d'obturation (5) et lorsque l'ouverture de capteur (4) est ouverte par le dispositif d'obturation (5).

3. Dispositif de mesure (M) selon la revendication 1 ou 2,
**caractérisé en ce que** le moyen (1) comporte un deuxième élément d'étanchéité (14) entre l'espace de mesure et le dispositif d'obturation (5), au moyen duquel l'espace de mesure est rendu étanche vis à vis du dispositif d'obturation (5) lorsque le capteur de température (2) est disposé dans l'espace de mesure.

4. Dispositif de mesure (M) selon l'une quelconque des revendications 1 à 3,
**caractérisé en ce que** le moyen (1) comprend un boîtier (3) pouvant être fixé dans une ouverture de paroi ménagée dans une paroi entourant l'espace de mesure et comportant l'ouverture de capteur (4) à travers laquelle le capteur de température (2) peut être introduit dans l'espace de mesure.

5. Dispositif de mesure (M) selon la revendication 4, **caractérisé en ce que** le boîtier (3) est réalisé de manière à être arrondi et **en ce que** l'ouverture de capteur (4) est disposée de manière excentrée dans le boîtier (3).

6. Dispositif de mesure (M) selon la revendication 4 ou 5,
**caractérisé en ce que** le dispositif d'obturation (5) est réalisé sous la forme d'un disque disposé dans le boîtier (3) et est monté de manière à pouvoir tourner, lequel disque comporte une ouverture de passage (6) permettant le passage du capteur de température (2), laquelle ouverture de passage (6) étant disposée de manière excentrée dans le dispositif d'obturation (5) afin qu'il puisse être positionné au moyen d'une rotation du dispositif d'obturation (5) à une position prédéterminée sur l'ouverture de capteur (4) dans le boîtier (3).

7. Dispositif de mesure (M) selon l'une quelconque des revendications précédentes,
**caractérisé en ce que** l'élément d'encliquetage (20, 21) réalisé ou disposé sur le capteur de température (2) est positionné dans la région d'une extrémité inférieure, dans la région d'une extrémité supérieure ou dans une région intermédiaire du capteur de température (2).

8. Dispositif de mesure (M) selon l'une quelconque des revendications précédentes,
**caractérisé en ce que** l'un des éléments d'encliquetage (20, 21) est réalisé sous la forme d'une rainure d'encliquetage et **en ce que** l'autre élément d'encliquetage (20, 21) correspondant à celui-ci est soumis à une précontrainte au moyen d'un élément à ressort (22) au moins dans la direction de la rainure d'encliquetage lorsque les éléments d'encliquetage (20, 21) sont positionnés à proximité immédiate les uns des autres mais ne sont pas encore encliquetés les uns dans les autres, dans lequel l'élément d'encliquetage (20) réalisé sous la forme d'une rainure d'encliquetage est réalisé sur le capteur de température (2) et l'autre élément d'encliquetage (21) correspondant à celui-ci est réalisé ou disposé sur le moyen (1) ou dans lequel l'élément d'encliquetage (20) réalisé sous la forme d'une rainure d'encliquetage est réalisé sur le moyen (1) et l'autre élément d'encliquetage (21) correspondant à celui-ci est réalisé ou est disposé sur le capteur de température (2).

9. Dispositif de mesure (M) selon la revendication 8, **caractérisé en ce que** l'élément d'encliquetage (20) réalisé sous la forme d'une rainure d'encliquetage est réalisé de manière à entourer une circonférence du capteur de température (2) ou est réalisé de manière à entourer une circonférence interne de l'ouverture de passage (6).

10. Dispositif de mesure (M) selon la revendication 8 ou 9,
**caractérisé en ce que** l'autre élément d'encliquetage (21) correspondant à l'élément d'encliquetage (20) réalisé sous la forme d'une rainure d'encliquetage est réalisé sous la forme d'une bille, d'un boulon, d'un ergot d'encliquetage ou d'une bague d'encliquetage élastique, dans lequel, dans le cas de la bague d'encliquetage, l'élasticité de cette dernière forme l'élément à ressort (22) produisant une précontrainte sur ladite bage d'encliquetage.

11. Dispositif de mesure (M) selon l'une quelconque des revendications 6 à 10,
**caractérisé en ce que** le dispositif d'obturation (5) comporte un levier de réglage (7) disposé latéralement.

12. Dispositif de mesure (M) selon la revendication 11,
**caractérisé en ce que** le levier de réglage (7) est amené à passer à travers une ouverture latérale (3.5) ménagée dans le boîtier (3), laquelle ouverture latérale permet un décalage du levier de réglage (7) et permet de ce fait une mise en rotation du dispositif d'obturation (5).

13. Dispositif de mesure (M) selon l'une quelconque des revendications précédentes,
**caractérisé par** un élément de support (10) destiné à supporter le capteur de température (2) dans le moyen (1).
